# EUROPÄISCHE PATENTSCHRIFT

(11) **EP 2 797 772 B1**
(45) Veröffentlichungstag und Bekanntmachung des Hinweises auf die Patenterteilung: **02.12.2020**
(21) Anmeldenummer: 12821228.9
(22) Anmeldetag: 21.12.2012
(51) Int. Cl.: B60Q 1/14, B60Q 11/00, F21S 41/16, F21S 41/176, F21S 45/10, F21Y 115/30

(54) **SICHERHEITSVORRICHTUNG FÜR SCHEINWERFER MIT LASERLICHTQUELLEN UND VERFAHREN ZUM ABSCHALTEN VON LASERLICHTQUELLEN BEI SICHERHEITSKRITISCHEN ZUSTÄNDEN**
SAFETY DEVICE FOR HEADLIGHTS WITH LASER LIGHT SOURCES AND METHOD FOR SHUTTING DOWN LASER LIGHT SOURCES IN CASE OF SAFETY-CRITICAL CONDITIONS
DISPOSITIF DE SÉCURITÉ POUR PHARES À SOURCES DE LUMIÈRE LASER ET PROCÉDÉ DE DÉSACTIVATION DE SOURCES DE LUMIÈRE LASER LORS D'ÉTATS CRITIQUES POUR LA SÉCURITÉ

(30) Priorität: 29.12.2011 AT 19052011
(43) Veröffentlichungstag der Anmeldung: 05.11.2014
(73) Patentinhaber: ZKW Group GmbH, 3250 Wieselburg (AT)
(72) Erfinder: TIEFENBACHER, Ewald, A-3373 Kemmelbach (AT)
(74) Vertreter: Patentanwaltskanzlei Matschnig & Forsthuber OG
(86) Internationale Anmeldenummer: PCT/AT2012/050205
(87) Internationale Veröffentlichungsnummer: WO 2013/096984

(56) Entgegenhaltungen:
- WO-A1-2012/124522
- WO-A1-2012/124607
- DE-A1-102008 022 795
- DE-A1-102010 028 949
- GB-A- 1 146 134
- US-A1- 2011 063 115
- US-A1- 2011 084 609
- US-B1- 6 417 624

## Beschreibung

Die Erfindung bezieht sich auf eine Sicherheitsvorrichtung für Scheinwerfer mit Laserlichtquellen, welche zum Abschalten von Laserlichtquellen bei sicherheitskritischen Zuständen eingerichtet ist, wobei eine Scheinwerfereinheit zumindest eine Laserlichtquelle, einen Lichtwandler und eine Optik aufweist, eine Überwachungsanordnung dazu eingerichtet ist, bei Vorliegen sicherheitskritischer Zustände Steuersignale abzugeben und eine Scheinwerferansteuerung dazu eingerichtet ist, bei Zuführung solcher Steuersignale die zumindest eine Laserlichtquelle abzuschalten/abgeschaltet zu halten.

Ebenso bezieht sich die Erfindung auf ein Verfahren zur Sicherheitsabschaltung der zumindest einen Laserlichtquelle zumindest eines Scheinwerfers in einem Kraftfahrzeug, bei welchem bei Auftreten eines einem kritischen Zustand entsprechenden sicherheitsrelevanten Signals die Laserlichtquelle abgeschaltet/abgeschaltet gehalten wird.

Der Einsatz von Laserlichtquellen in Kraftfahrzeugen gewinnt derzeit an Bedeutung, da z.B. die Abmessungen von Laserdioden verglichen mit üblichen Leuchtdioden kleiner sind, was flexiblere und effizientere Einbaulösungen ermöglich, und auch die Leuchtdichte des Lichtbündels erheblich gesteigert werden kann.

Laserdioden für den Einsatz in Kraftfahrzeugscheinwerfern werden derzeit mit einer Leistung in der Größenordnung von 1 W betrieben, doch sind bereits bei Lasern von mehr als 2 mW Gefahren für das menschliche (und tierische) Auge gegeben. Bei den bekannten Lösungen wird allerdings kein direkter Laserstrahl emittiert, um eine Gefährdung der Augen von Menschen und anderen Lebewesen durch den extrem gebündelten Lichtstrahl hoher Leistung zu vermeiden. Der Laserstrahl wird vielmehr auf einen zwischengeschalteten Konverter, der beispielsweise einen Phosphor enthält, von z.B. blauem Licht in weißes Licht umgewandelt.

Aus der US 2011/0063115 A1 ist es bekannt geworden, bei einem Scheinwerfer der in Frage stehenden Art einen Teil des abgestrahlten Lichtes mit Photosensoren aufzunehmen, auf seine spektrale Eigenschaften zu untersuchen und bei Regelwidrigkeiten den Laser abzuschalten.

Die DE 10 2010 028 949 A1 beschreibt, ohne dabei näher auf Aufbau und Funktion einzugehen, das Abschalten eines Lasers, dessen Strahl in einen Schweinwerfer über schwenkbare Mikrospiegel auf Leuchtstoffe umgelenkt wird, falls diese Umlenkung ausfällt. Ein Abschalten kann auch im Fall eines offenen Scheinwerfergehäuses oder bei Bruch des Scheinwerferglases erfolgen.

Ein Scheinwerfer der gegenständlichen Art ist in der US 2011/084,609 beschrieben. Dieses Dokument beschäftigt sich mit dem Problem einer Gefährdung der Augen von Personen bei einem Schaden einer fluoreszierenden Platte, auf welche ein Laserstrahl auftrifft und die zur Umwandlung in sichtbares Licht dient. Dabei wird von der fluoreszierenden Platte rückgestrahltes Licht überwacht, damit bei Feststellen eines Schadens an/in dieser Platte abgeschaltet werden kann. Auf diese Weise soll verhindert werden, dass z.B. bei einem Bruch der Platte aufgrund eines Unfalls Personen schwere Augenverletzungen oder ein Erblinden erleiden. Darin ist auch die Aufgabe in diesem Dokument zu sehen.

Mit völlig anderen Themen beschäftigt sich hingegen das Dokument US 6,417,624 B1, nämlich mit einem Scheinwerfersystem, bei welchem mit einer einzigen Beleuchtungsschaltung mehrere Entladungslampen gespeist werden, um Kosten und Bauraum zu sparen.

Nachteilig ist bei einem derartigen Scheinwerfersystem die Gefahr, dass im Falle eines Fehlers in der Beleuchtungsschaltung sämtliche Entladungslampen gleichzeitig ausfallen. Um diesem Nachteil zu begegnen, wird die Beleuchtungsschaltung überwacht, um im Falle eines Defekts rechtzeitig eine Ersatzlampe aktivieren zu können. Wie in dem Dokument weiters beschrieben, wird bei einem in der Beleuchtungsschaltung festgestellten Fehler die Stromversorgung der Lampen sicherheitshalber abgeschaltet. Die in diesem Dokument gestellte Aufgabe kann daher darin gesehen werden, bei einem System mit einer einzigen Beleuchtungsschaltung für mehrere Entladungslampen - wobei in der Praxis im Gegensatz zu dem Lösungsansatz des Dokumentes für jede Entladungslampe ein eigenes Vorschaltgerät verwendet wird - Ersatzlampen zu aktivieren. Im Gegensatz zu dem zuvor genannten Dokument liegt somit weder eine Laserquelle noch dementsprechend der Wunsch vor, Augenverletzungen zu vermeiden.

Die Anmelderin hat im Zuge ihrer Entwicklungsarbeit erkannt, dass es eine große Anzahl von fehlerhaften Betriebszuständen bei Laserscheinwerfern geben kann, die als sicherheitskritisch anzusehen sind und zu einem Abschalten der Laserlichtquelle führen sollen. Viele dieser Zustände können entweder bei herkömmlichen Scheinwerfern nicht auftreten oder müssten nicht als sicherheitskritisch eingestuft werden, so dass sich die Frage eines automatischen Einschaltens zusätzlicher Scheinwerfer gar nicht stellt, beispielsweise bei einem Bruch des Scheinwerferglases.

Bei "Laserscheinwerfern" gelten aber andere Anforderungen, wobei ein plötzlicher Lichtausfall durch Abschalten speziell bei höherer Geschwindigkeit ein erhebliches Sicherheitsrisiko für unbeteiligte Verkehrsteilnehmer und letztlich den Fahrer selbst darstellt - der Fahrer fährt unversehens in "Finsternis" hinein.

Dementsprechend liegt eine Aufgabe der Erfindung darin, eine Sicherheitsvorrichtung bzw. ein Verfahren zur Sicherheitsabschaltung für Scheinwerfer mit mindestens einer Laserlichtquelle zu schaffen, welche unter Berücksichtigung der besonderen obengenannten Probleme bei Laserscheinwerfern die Verkehrs- und Personensicherheit sicherstellt.

Diese Aufgabe wird mit einer Vorrichtung der eingangs genannten Art gelöst, bei welcher erfindungsgemäß zumindest ein Zusatzscheinwerfer sowie ein von der Scheinwerferansteuerung gesteuertes Schaltmittel vorgesehen ist, welches bei Ausschalten der Laserlichtquelle den Zusatzscheinwerfer einschaltet.

Ebenso wird die Aufgabe mit einem Verfahren der obengenannten Art gelöst, bei welcher erfindungsgemäß bei Ausschalten der Laserlichtquelle zumindest ein Zusatzscheinwerfer eingeschaltet wird.

Weitere zweckmäßige Merkmale sind in den abhängigen Ansprüchen 2 bis 8 und 10 bis 17 gekennzeichnet.

Die Erfindung samt weiteren Vorteilen ist im Folgenden an Hand von Ausführungsbeispielen näher erläutert, die in der Zeichnung veranschaulicht sind. In dieser zeigen
Fig. 1 ein Blockschaltbild einer erfindungsgemäßen Vorrichtung in stark schematischer Darstellung,
Fig. 1a schematisch den Anschluss eines Servicegerätes an, eine Scheinwerfereinheit,
Fig. 2 ein mögliches Ablaufdiagramm des erfindungsgemäßen Verfahrens und
Fig. 3 ein anderes mögliches Ablaufdiagramm des erfindungsgemäßen Verfahrens.

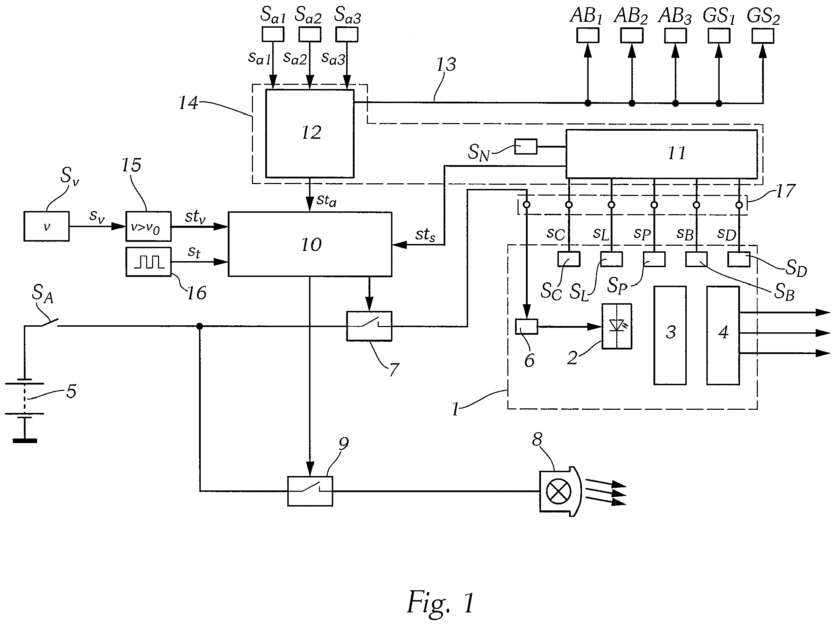

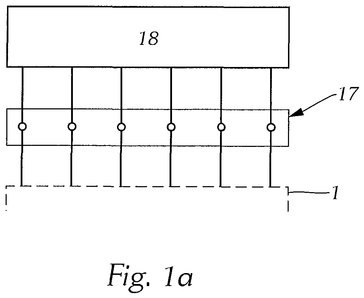

Aus Fig. 1 geht eine Scheinwerfereinheit 1 hervor, die zumindest eine Laserlichtquelle 2, insbesondere eine oder mehrere Laserdioden, weiters einen Lichtwandler 3 zur Umwandlung des meist kurzwelligen Laserlichts in weißes Licht und im Allgemeinen eine Optik 4, meist ein Linsen/Spiegelsystem aufweist. Der Lichtwandler 3 enthält eine fluoreszierende Substanz, kurz "Phosphor", oft ein Oxynitrid, welche auf die Wellenlänge des Laserlichts abgestimmt eine hohe Ausbeute an möglichst weißem Licht ergibt, z.B. US 7,611,642 B2. Ein Scheinwerfer dieser Art geht beispielsweise aus der US 2011/0148280 A1 hervor. Zwischen dem Laser oder mehreren Lasern und dem Phosphor kann sich noch ein Spiegel, ein Spiegelsystem oder ein vibrierender Spiegel befinden, wie z.B. in der eingangs genannten DE 10 2010 028 949 A1 beschrieben. Wenn in dieser Beschreibung von einer Scheinwerfereinheit oder einem Scheinwerfer die Rede ist, soll es klar sein, dass je nach Kraftfahrzeug und Bedürfnissen mindestens ein Scheinwerfer vorhanden sein wird (z.B. bei einem Motorrad), meist aber mindestens zwei oder mehr Scheinwerfer. Eine Scheinwerfereinheit kann weiters hier nicht gezeigte Komponenten, wie verstellbare Blenden, Umschaltmittel von Fern- auf Abblendlicht und dgl. mehr aufweisen.

Die Stromversorgung der Laserlichtquelle 2 erfolgt ausgehend von einer Fahrzeugbatterie 5, einem Schalter S_{A} und einer Stromversorgung 6 zur Bereitstellung geeigneter Ströme bzw. Spannungen hier symbolisch über einen gesteuerten Ausschalter 7. Weiters kann ein konventioneller Zusatzscheinwerfer 8 vorgesehen sein, der z.B. eine Halogenlampe als Leuchtmittel aufweist und über ein gesteuertes Schaltmittel 9 mit Spannung versorgt werden kann.

Die Ansteuerung der Schaltmittel 7 und 9 erfolgt von einer Scheinwerferansteuerung 10, wobei es klar sein soll, dass die Schaltmittel 7 und 9 an beliebiger Stelle, z.B. innerhalb der Scheinwerferansteuerung 10 angeordnet und ihrem Zweck entsprechend als mechanische Schalter oder Halbleiterschalter ausgebildet sein können.

Die eingangs genannte Problematik von Laserlichtquellen berücksichtigend sind Sensoren zur Überwachung sicherheitskritischer Zustände vorgesehen, im vorliegenden Beispiel ein Lagesensor S_{L}, welcher die Positionierung der Laserlichtquelle 2 bezüglich des Lichtwandlers 3 erfasst und ein Lagesignal s_{L} abgibt, ein Phosphorsensor S_{P}, welcher den Zustand des Phosphors in dem Leuchtmittel 3 erfasst und ein Phosphor-Zustandssignal s_{P} abgibt, ein Bruchsensor S_{B}, welcher bei Bruch wesentlicher Teile der Scheinwerfereinheit 1 ein Bruchsignal s_{B} abgibt sowie ein Deckelsensor und/oder ein Abdeckglassensor S_{D}, welcher bei Öffnen eines Deckels der Scheinwerfereinheit 1 ein entsprechendes Deckelsignal s_{D} abgibt. Weiters kann überprüft werden, ob die seitens des Lasers dem Phosphor zugeführte Energie nicht so groß wird, dass der Phosphor in Sättigung geht und in der Folge transparent wird (gleichfalls ein sicherheitskritischer Zustand), da sämtliche Elektronen in höhere Bahnen gehoben wurden und keine mehr für eine Anregung zur Verfügung stehen.

Die genannten Signale sind, wie Fig. 1 zeigt, einer Scheinwerfer-Sensorauswertung 11 zugeführt, die bei Auftreten von als kritisch erkannten Zuständen ein Steuersignal stₛ zur Scheinwerferansteuerung 10 führt. Solche kritischen Zustände können beispielsweise sein: Ein im Betrieb der Scheinwerfereinheit 1 geöffneter Deckel oder ein abgenommenes Deckglas, eine Fehlpositionierung der Laserlichtquelle, die ihren Lichtstrahl statt an den Phosphor ins Freie wirft, eine Beschädigung des Phosphors oder ein Bruch von Scheinwerferteilen. Die hier erfolgte Aufzählung ist natürlich nicht erschöpfend und je nach Sicherheitsanforderung oder Bauart des Scheinwerfers können weitere Sensoren vorgesehen sein, die sicherheitsrelevante Signale an die Scheinwerfer-Sensorauswertung 11 liefern, vorgesehen sein, z.B. Temperatursensoren, die eine Überhitzung anzeigen.

In der Scheinwerfereinheit 1 ist weiters ein Codespeicher Sc für einen Sicherheitscode vorgesehen, welcher der Scheinwerfer-Sensorauswertung 11 als Codesignal s_{c} zugeführt bzw. von diesen ausgelesen werden kann. Andererseits ist im Fahrzeug ein Speicher S_{N} vorgesehen, auf den seitens der Sensorauswertung 11 zugegriffen werden kann, und in dem ein fahrzeugspezifischer Code, beispielsweise die Seriennummer des Fahrzeugs enthalten ist.

Aus Fig. 1 geht weiters ein Airbag-Steuergerät 12 bekannter Bauweise hervor, dem eine Anzahl von Crashsignalen sₐ₁, sₐ₂, sₐ₃ entsprechender Crashsensoren Sₐ₁, Sₐ₂, Sₐ₃, im Allgemeinen Beschleunigungssensoren, zugeführt ist und die über eine Ansteuerleitung 13 z.B. Airbags AB₁, AB₂, AB₃ und Gurtstraffer GS₁, GS₂ ansteuert und bei Bedarf auslöst. Zumindest eines der entsprechenden Auslösesignale wird als Steuersignal stₐ auch der Scheinwerferansteuerung 10 zugeführt. Es ist aus dem obigen klar, dass das Steuersignal stₐ auch ganz allgemein von einem Beschleunigungssensor stammen kann, der unabhängig von einem Airbag-System ist.

Die Scheinwerfer-Sensorauswertung 11 und das Airbag-Steuergerät 12 bilden somit eine Überwachungsanordnung 14, die Steuersignale stₛ und stₐ an die Scheinwerferansteuerung 10 abgeben kann.

Optional kann das Geschwindigkeitssignal sᵥ eines ohnedies fast immer vorhandenen Geschwindigkeitssensors Sᵥ ausgewertet werden, wozu bei dem Ausführungsbeispiel in einem Vergleicher 15 festgestellt wird, ob eine vorgebbare Geschwindigkeit v₀ über- oder unterschritten wird. Diese Information wird als weiteres Steuersignal stᵥ der Scheinwerferansteuerung 10 zugeführt.

Schließlich kann ein Taktgeber 16 vorgesehen sein, welcher ein Taktsignal sₜ an die Scheinwerferansteuerung 10 liefert, um zu ermöglichen, dass die Überprüfung zumindest bestimmter Sicherheitsrelevante Signale periodisch, beispielsweise alle 20 ms durchgeführt wird.

Es soll hervorgehoben werden, dass die einzelnen Komponenten des Blockschaltbildes in Fig. 1 vorrangig der Verdeutlichung der Erfindung dienen und keine zwingende Schaltungs- oder Softwaregeometrie darstellen sollen. Beispielsweise könnten die Blöcke 10, 11, 12, 15 und 16 in einer integrierten Schaltung bzw. auf einem Chip vereint sein.

Der Fachmann erkennt aus dem oben Beschriebenen, dass eine Sicherheitsvorrichtung vorliegt, die im Wesentlichen ein fahrzeugseitiges Teilsystem und ein scheinwerferseitiges Teilsystem aufweist, wobei die beiden Teilsysteme über eine Schnittstelle 17 miteinander in Verbindung stehen.

Im vorliegenden Ausführungsbeispiel umfasst das scheinwerferseitige Teilsystem die Sensoren S_{L}, S_{P}, S_{B}, S_{D} und den Speicher S_{C}, doch könnten auch andere Komponenten in dem scheinwerferseitigen Teilsystem enthalten sein, wie beispielsweise die Sensorauswertung 11, nicht jedoch der Speicher S_{N} für den fahrzeugspezifischen Code.

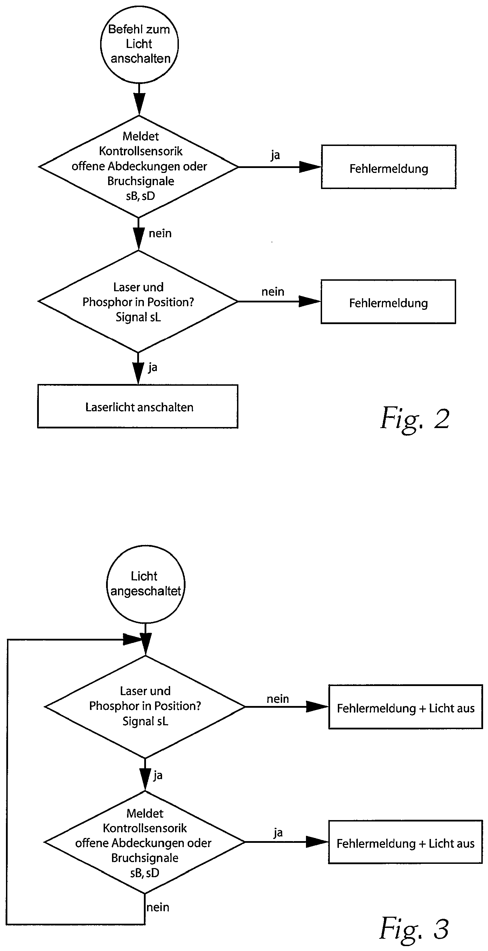

Im Folgenden wird die Funktion der Erfindung auch unter Bezugnahme auf die Ablaufdiagramme der Fig. 2 und 3 näher erläutert.

Im normalen Betrieb wird durch Einschalten des Schalters S_{A} die Stromversorgung 6 aktiviert und sie liefert einen Strom bzw. eine Spannung über den geschlossenen Schalter 7 an die Laserlichtquelle 2 der Scheinwerfereinheit 1. Das relativ kurzwellige Licht der Laserlichtquelle 2 wird in dem Lichtwandler 3 mit Hilfe einer fluoreszierenden Substanz, kurz "Phosphor" genannt, in vorzugsweise weißes Licht umgewandelt und mit Hilfe der Optik 4 in der gewünschten Bündelung im allgemeinen nach vorne auf die Straße abgegeben.

Es können jedoch verschiedene kritische Situationen auftreten, in welchen nicht mehr gewährleistet ist, dass das Laserlicht der Laserlichtquelle 2 von dem Lichtwandler 3 aufgefangen wird und viel mehr unkontrolliert in eine Richtung strahlt, in welcher Personen durch den Laserstrahl am Auge verletzt werden können bzw. dadurch erblinden. Einer dieser Fälle ist ein Zusammenstoß mit einem anderen Fahrzeug oder mit einem festen oder bewegten Hindernis, beispielsweise einem Wildtier. In einem solchen Fall kann die Scheinwerfereinheit 1 zerbrechen und das unkontrollierte Abstrahlen des Laserlichtes eintreten.

Für diesen Fall sieht die Erfindung vor, dass zumindest eines der Ansteuersignale (Leitung 13) für Airbags oder Gurtstraffer von dem Airbag-Steuergerät 12 als Steuersignal SDₐ dazu verwendet wird, die Laserlichtquelle 2 sofort abzuschalten, was beispielsweise über den Schalter 7 geschehen kann. Bei höheren Anforderungen an die Sicherheit können mit Vorteil auch empfindlichere Unfallsensoren, insbesondere Beschleunigungssensoren vorgesehen sein, da Airbags erst bei relativ hohen Beschleunigungswerten auslösen, ein Scheinwerfer aber bereits bei verhältnismäßig harmlosen Unfällen beschädigt werden können.

Es gibt jedoch eine Anzahl von anderen kritischen Situationen, die nicht mit einem Unfall unmittelbar in Verbindung stehen und die dennoch zu einem Freisetzen des Laserstrahls der Laserlichtquelle 2 führen können. Es kann beispielsweise ein mechanischer, z.B. durch Vandalismus verursachter Fehler innerhalb der Scheinwerfereinheit 1 dazu führen, dass der Laserstrahl der Laserlichtquelle 2 nicht mehr auf die entsprechende Stelle des Lichtwandlers 3 fällt, sondern daneben verläuft. Für diesen Fall ist der Lagesensor S_{L} vorgesehen, welcher bei einer Missjustierung ein Signal S_{L} an die Scheinwerfer-Sensorauswertung 11 abgibt, was schließlich an deren Ausgang ein Steuersignal Sts für die Scheinwerferansteuerung 10 und damit ein Abschalten der Laserlichtquelle 2 zur Folge hat. Insbesondere kann auch überprüft werden, ob sich der Laserstrahl der Laserlichtquelle 2 in einem vorgegebenen Toleranzbereich zum Phosphor des Lichtwandlers 3 befindet, wobei ein entsprechendes Sicherheitsrelevante Signale an die Überwachungsanordnung 14 abgegeben werden kann, um über die Scheinwerferansteuerung 10 die Energiezufuhr an den Scheinwerfer zu beenden. Ebenso kann bei einer nicht akut gefährlichen Fehljustierung ein Warnsignal abgegeben, welches z.B. zum Besuch einer Werkstatt auffordert.

Eine weitere Gefahrenquelle kann eine Veränderung des Phosphors des Lichtwandlers 3 sein, die dazu führen kann, dass das Laserlicht ohne Umwandlung den Lichtwandler 3 durchdringt. Auch in diesen Fall wird ein Sicherheitsrelevante Signale s_{B} über die Sensorauswertung 11 und die Scheinwerferansteuerung 10 zu einem Abschalten der Laserlichtquelle 2 führen. Da eine zu hohe Strahlleistung der Laserlichtquelle ebenfalls zu einer Sättigung des Phosphors führen kann, ist es oft zweckmäßig wenn die Leistung der Laserlichtquelle 2 überwacht wird und bei Überschreiten einer vorgegebenen Maximalleistung die Laserlichtquelle abgeschaltet wird. Es kann auch beispielsweise an dem Gehäuse der Scheinwerfereinheit 1 und/oder an deren Reflektor und/oder an einem Abdeckglas ein Bruchsensor S_{B} vorhanden sein, der ein Bruchsignal s_{B} abgibt und auch zu einem Abschalten der Laserlichtquelle 2 führt. Solche Bruchsensoren können mit Vorteil jedoch nicht zwingend an Sollbruchstellen angeordnet werden und beispielweise aufgeklebte Drähte oder Leiterbahnen sein. Andererseits können auch optische Bruchsensoren, wie Lichtschranken eingesetzt werden. Bruchsensoren können auch an der Scheinwerferhalterung, an der Einstellmechanik oder an Halterungsteilen im Inneren des Scheinwerfers, wie an einem Tragrahmen, angeordnet sein. Um ein unbefugtes oder unbeabsichtigtes Öffnen eines Deckels und/oder Abdeckglases, somit einer Abdeckung der Scheinwerfereinheit 1, anzuzeigen, kann ein Deckelsensor S_{D} vorhanden sein, der durch Abgabe eines entsprechenden Signals s_{D} gleichfalls zum Abschalten der Laserlichtquelle 2 führt.

In einigen Fällen, die bei Fehlern in der Scheinwerfereinheit 1 auftreten, ist es sinnvoll, durch die Scheinwerferansteuerung 10 über einen Schalter 9 einen konventionellen Zusatzscheinwerfer 8 einzuschalten, damit bei Dunkelheit die Fahrt mit dem Fahrzeug ungehindert fortgesetzt werden kann. Bei Vorhandensein eines oder mehrerer solcher Zusatzscheinwerfer 8 kann es auch sinnvoll sein, das bereits beschriebene Geschwindigkeitssignal sv dazu zu verwenden, die Laserlichtquelle 2 erst ab einer bestimmten Geschwindigkeit, die größer als eine festgesetzte Geschwindigkeit v₀ ist, einzuschalten, da bei geringen Geschwindigkeiten nicht die gesamte Lichtstärke eines Laserscheinwerfers benötigt wird und allfällige Blendungen von Personen vermieden werden.

Um zu vermeiden, dass ein nicht passender und daher ein mögliches Sicherheitsrisiko darstellender Scheinwerfer in einem Fahrzeug montiert wird, kann in der Sensorauswertung 11 der im Codespeicher Sc des scheinwerferseitigen Teilsystems abgespeicherte Code mit dem fahrzeugspezifischen Code des Speichers S_{N} verglichen werden. Bei Nichtübereinstimmen der Codes sorgt das Steuersignal Sts für eine andauernde Unterbrechung der Energiezufuhr an die Scheinwerfereinheit 1.

In vielen Fällen ist es außerdem sinnvoll, durch den Taktgenerator 16 gesteuert, eine periodische Überprüfung bzw. Abfrage sämtlicher Sensoren durchzuführen, beispielsweise in Abständen von 20 bis 50 ms.

Die Überwachungsanordnung 14 kann bei einer vorteilhaften Variante auch hierarchisch arbeiten, d.h. dass z.B. Signale, welche die Scheinwerfereinheit als solche betreffen, bevorzugt behandelt und als wesentlich betrachtet werden. Signale oder Daten, die mit dem Fahrzeug oder der Fahraktivität in Verbindung stehen, werden somit als sekundäre Sicherheitsdaten betrachtet. Ein Beispiel soll dies erläutern: Falls ein Airbag ausgelöst wird, aber sämtliche Signale keinen Schaden an der Scheinwerfereinheit melden, erfolgt kein zwingendes Abschalten der Laserlichtquelle, um einen Betrieb bis zu einer Werkstatt zu ermöglichen.

Unter Bezugnahme auf Fig. 2 wird auch gezeigt, dass die erfindungsgemäße Vorrichtung dazu verwendet werden kann, das Einschalten der Laserlichtquelle 2 hintanzuhalten, falls gewisse Fehler eintreten. Im vorliegenden Fall wird in einer ersten Überprüfungsstufe überprüft, ob eine offene Abdeckung der Scheinwerfereinheit 1 vorliegt oder ein Bruch von Komponenten der Scheinwerfereinheit, und in einer zweiten Stufe wird überprüft, ob die Laserlichtquelle 2 und der Phosphor des Lichtwandlers 3 in korrekter Position ausgerichtet sind. In beiden Fällen kann bei Vorliegen von Fehlern eine Fehlermeldung abgegeben werden bzw. wird, falls keine Fehler vorliegen, die Laserlichtquelle 2 eingeschaltet.

Ein ähnliches Ablaufdiagramm der Fig. 3 zeigt das bereits beschriebene Abschalten bei Vorliegen von Fehlern und bedarf keiner weiteren Erläuterung bis auf den Hinweis, dass in Fig. 3 lediglich einige Fehlerzustände behandelt sind und beispielsweise nicht ein durch Ansprechen von Crash-Sensoren der Airbagsteuerung 12 verursachtes Abschalten.

Um eine Überprüfung der Scheinwerfereinheit 1 entweder im Herstellerwerk oder in einer Fachwerkstätte zu ermöglichen, kann an Stelle des fahrzeugseitigen Teilsystems der Sicherheitsvorrichtung über die Schnittstelle 17 ein Servicegerät 18 angeschlossen werden, welches ein Fahrzeug softwaremäßig simuliert. Dies ist in Fig. 1a schematisch dargestellt.

## Patentansprüche

1. Sicherheitsvorrichtung für Scheinwerfer mit Laserlichtquellen, welche zum Abschalten von Laserlichtquellen bei sicherheitskritischen Zuständen eingerichtet ist, wobei eine Scheinwerfereinheit (1) zumindest eine Laserlichtquelle (2), einen Lichtwandler (3) und eine Optik (4) aufweist, eine Überwachungsanordnung (14) dazu eingerichtet ist, bei Vorliegen sicherheitskritischer Zustände Steuersignale (stₐ, stₛ, stᵥ) abzugeben und eine Scheinwerferansteuerung (10) dazu eingerichtet ist, bei Zuführung solcher Steuersignale (stₐ,stₛ, stᵥ) die zumindest eine Laserlichtquelle (2) abzuschalten/abgeschaltet zu halten, **dadurch gekennzeichnet, dass** die Sicherheitsvorrichtung ein fahrzeugseitiges Teilsystem sowie ein scheinwerferseitiges Teilsystem aufweist, die beiden Teilsysteme über eine Schnittstelle miteinander in Verbindung stehen und zum Austausch sicherheitsrelevanter Signale (sa1, sa2, sa3, sL, sP, sB, sC,sD,) eingerichtet sind, und zumindest ein Zusatzscheinwerfer (8) sowie ein von der Scheinwerferansteuerung (10) gesteuertes Schaltmittel (9) vorgesehen ist, welches bei Ausschalten der Laserlichtquelle (2) den Zusatzscheinwerfer (8) einschaltet, wobei der Scheinwerferansteuerung (14) das Signal (sᵥ) eines Geschwindigkeitssensors (Sᵥ) zugeführt ist, wobei die Scheinwerferansteuerung dazu eingerichtet ist, bei Unterschreiten einer vorgebbaren Fahrzeuggeschwindigkeit (v₀) die Laserlichtquelle (2) aus und den Zusatzscheinwerfer (8) ein zu schalten.

2. Sicherheitsvorrichtung nach Anspruch 1, **dadurch gekennzeichnet, dass** von einem Beschleunigungssensor ein Steuersignal (stₐ) der Scheinwerferansteuerung (1c) zugeführt ist, die dazu eingerichtet ist, bei Überschreiten einer Maximalbeschleunigung ein Ausschaltmittel (7) der Laserlichtquelle (2) anzusteuern.

3. Sicherheitsvorrichtung nach einem der Ansprüche 1 bis 2, **dadurch gekennzeichnet, dass** von einem passiven Sicherheitssystem mit einem Airbag-Steuergerät (12) zumindest ein Steuersignal der Scheinwerferansteuerung (10) zugeführt ist, die dazu eingerichtet ist, bei Zuführung des Steuersignals (sta) ein Ausschaltmittel (7) der Laserlichtquelle (2) anzusteuern.

4. Sicherheitsvorrichtung nach einem der Ansprüche 1 bis 3, **dadurch gekennzeichnet, dass** zumindest ein, Zustände von Komponenten der Scheinwerfereinheit (10) überwachender Scheinwerfersensor (S_{L}, S_{P}, S_{B}, S_{D}) vorgesehen ist und bei Erfassung fehlerhafter Zustände ein in der Überwachungsanordnung (14) erzeugtes Steuersignal (sts) der Scheinwerferansteuerung (10) zugeführt ist.

5. Sicherheitsvorrichtung nach einem der Ansprüche 1 bis 4, **dadurch gekennzeichnet, dass** ein Lagesensor (S_{L}) für die Positionierung der Laserlichtquelle (2) vorgesehen ist.

6. Sicherheitsvorrichtung nach einem der Ansprüche 1 bis 5, **dadurch gekennzeichnet, dass** ein Phosphorsensor (Sp) für den Zustand des Phosphors des Lichtwandlers (3) der Laserlichtquelle (2) vorgesehen ist.

7. Sicherheitsvorrichtung nach einem der Ansprüche 1 bis 6, **dadurch gekennzeichnet, dass** zumindest ein Bruchsensor (S_{B}) für zumindest ein Bauteil der Scheinwerfereinheit (1) vorgesehen ist.

8. Sicherheitsvorrichtung nach einem der Ansprüche 1 bis 7, **dadurch gekennzeichnet, dass** ein Deckelsensor und/oder ein Abdeckglassensor (S_{D}) für die Scheinwerfereinheit (1) vorgesehen ist.

9. Verfahren zur Sicherheitsabschaltung der zumindest einen Laserlichtquelle (2) zumindest eines Scheinwerfers (1) in einem Kraftfahrzeug, bei welchem bei Auftreten eines einem kritischen Zustand entsprechenden sicherheitsrelevanten Signals die Laserlichtquelle (2) abgeschaltet/abgeschaltet gehalten wird, **dadurch gekennzeichnet, dass**
zwischen einem fahrzeugseitigen Teilsystem und einem scheinwerferseitiges Teilsystem
über eine Schnittstelle sicherheitsrelevante Signale (sa1, sa2, sa3, sL, sP, sB, sC,sD,) ausgetauscht und einer Überwachungsanordnung (14) zugeführt werden und von dieser Steuersignale (sta, sts, stv) einer Scheinwerferansteuerung (10) zugeführt werden, und
bei Ausschalten der Laserlichtquelle (2) zumindest ein Zusatzscheinwerfer (8) eingeschaltet wird, wobei der Scheinwerferansteuerung (10) das Signal (sᵥ) eines Geschwindigkeitssensors (Sᵥ) zugeführt wird, wobei bei Unterschreiten einer vorgebbaren Fahrzeuggeschwindigkeit die Laserlichtquelle (2) aus und der Zusatzscheinwerfer (8) ein geschaltet wird.

10. Verfahren nach Anspruch 9, **dadurch gekennzeichnet, dass** der Scheinwerferansteuerung (10) ein Steuersignal (sta) eines Beschleunigungssensors zugeführt wird.

11. Verfahren nach einem der Ansprüche 9 bis 10, **dadurch gekennzeichnet, dass** der Scheinwerferansteuerung (10) seitens eines Airbag-Steuergeräts (12) Steuersignale (sta) für Airbags und/oder Gurtstraffer zugeführt werden.

12. Verfahren nach einem der Ansprüche 9 bis 11, **dadurch gekennzeichnet, dass** mit Hilfe zumindest eines Scheinwerfersensors (S_{L}, S_{P}, S_{B}, S_{D}) Zustände von Komponenten der Scheinwerfereinheit (1) überwacht werden und bei fehlerhaften Zuständen der Scheinwerferansteuerung (10) ein Steuersignal (sts) zugeführt wird.

13. Verfahren nach einem der Ansprüche 9 bis 12, **dadurch gekennzeichnet, dass** mit Hilfe eines Sensors (S_{L}) die Positionierung der Laserlichtquelle (2) überwacht wird.

14. Verfahren nach einem der Ansprüche 9 bis 13, **dadurch gekennzeichnet, dass** mit Hilfe eines Sensors (S_{P}) der Zustand des Lichtwandlers (3) der Laserlichtquelle (2) überwacht wird.

15. Verfahren nach einem der Ansprüche 9 bis 14, **dadurch gekennzeichnet, dass** mit Hilfe eines Bruchsensors (S_{bB}) die Integrität der Scheinwerfereinheit (1) überwacht wird.

16. Verfahren nach einem der Ansprüche 9 bis 15, **dadurch gekennzeichnet, dass** mit Hilfe eines Deckelsensors (S_{D}) der Schließzustand zumindest eines Deckels der Scheinwerfereinheit (1) überwacht wird.

17. Verfahren nach einem der Ansprüche 9 bis 16, **dadurch gekennzeichnet, dass** die Leistung der Laserlichtquelle (2) überwacht wird und bei Überschreiten einer vorgegebenen Maximalleistung die Laserlichtquelle abgeschaltet wird.

## Claims

1. Safety device for headlights with laser light sources, which is set up for switching off laser light sources in safety-critical states, a headlight unit (1) having at least one laser light source (2), a light converter (3) and an optical system (4), a monitoring arrangement (14) is arranged to emit control signals (sta, sts, stv) in the presence of safety-critical states and a headlamp control (10) is arranged to switch off/maintain the at least one laser light source (2) switched off when such control signals (sta, sts, stv) are supplied,
**characterized in that**
the safety device has a subsystem on the vehicle side and a subsystem on the headlamp side, the two subsystems are connected via an interface and are set up to exchange safety-relevant signals (sa1, sa2, sa3, sL, sP, sB, sC, sD), and
at least one additional headlamp (8) is provided as well as a switching means (9) controlled by the headlamp control (10), which switches on the additional headlamp (8) when the laser light source (2) is switched off,
where
the headlamp control (14) is supplied with the signal (sv) of a speed sensor (Sv), the headlamp control being set up to switch the laser light source (2) off and the auxiliary headlamp (8) on when the vehicle speed (v₀) falls below a predeterminable vehicle speed.

2. Safety device according to claim 1, **characterized in that** a control signal (sta) is fed from an acceleration sensor to the headlight control (1c), which is set up to control a switch-off means (7) of the laser light source (2) when a maximum acceleration is exceeded.

3. Safety device according to one of claims 1 to 2, **characterized in that** at least one control signal is fed from a passive safety system with an airbag control unit (12) to the headlamp control (10), which is set up to control a switch-off means (7) of the laser light source (2) when the control signal (sta) is fed.

4. Safety device according to one of claims 1 to 3, **characterized in that** at least one headlamp sensor (SL, SP, SB, SD) monitoring the states of components of the headlamp unit (10) is provided and, if incorrect states are detected, a control signal (sts) generated in the monitoring arrangement (14) is fed to the headlamp control (10).

5. Safety device according to one of the claims 1 to 4, **characterized in that** a position sensor (SL) is provided for the positioning of the laser light source (2).

6. Safety device according to one of the claims 1 to 5, **characterized in that** a phosphorus sensor (SP) is provided for the state of the phosphorus of the light converter (3) of the laser light source (2).

7. Safety device according to one of the claims 1 to 6, **characterized in that** at least one breakage sensor (SB) is provided for at least one component of the headlight unit (1).

8. Safety device according to one of the claims 1 to 7, **characterized in that** a cover sensor and/or a cover glass sensor (SD) is provided for the headlight unit (1).

9. Method for the safety switch-off of the at least one laser light source (2) of at least one headlamp (1) in a motor vehicle, in which method the laser light source (2) is kept switched off/switched off when a safety-relevant signal corresponding to a critical state occurs, **characterized in that**
between an on-board subsystem and a headlamp subsystem
safety-relevant signals (sa1, sa2, sa3, sL, sP, sB, sC, sD,) are exchanged via an interface and supplied to a monitoring arrangement (14) and from this monitoring arrangement control signals (sta, sts, stv) are supplied to a headlamp control (10), and
when the laser light source (2) is switched off, at least one additional headlamp (8) is switched on, the signal (sv) of a speed sensor (Sv) being fed to the headlamp drive (10), the laser light source (2) being switched off and the additional headlamp (8) being switched on when the vehicle speed falls below a predeterminable vehicle speed.

10. Method according to claim 9, **characterized in that** a control signal (sta) of an acceleration sensor is fed to the headlamp control (10).

11. Method according to any one of claims 9 to 10, **characterized in that** control signals (sta) for airbags and/or belt tensioners are supplied to the headlight control (10) from an airbag control unit (12).

12. Method according to one of the claims 9 to 11, **characterized in that** the states of components of the headlamp unit (1) are monitored with the aid of at least one headlamp sensor (SL, SP, SB, SD) and, in the event of faulty states of the headlamp control unit (10), the control signals (sta) for airbags and/or belt tensioners are fed to the headlamp control unit (10).

13. Method according to one of claims 9 to 12, **characterized in that** the positioning of the laser light source (2) is monitored by means of a sensor (SL).

14. Method according to one of the claims 9 to 13, **characterized in that** the state of the light converter (3) of the laser light source (2) is monitored with the aid of a sensor (SP).

15. Method according to one of the claims 9 to 14, **characterized in that** the integrity of the headlamp unit (1) is monitored with the aid of a breakage sensor (SbB).

16. Method according to one of claims 9 to 15, **characterized in that** the closed state of at least one cover of the headlamp unit (1) is monitored with the aid of a cover sensor (SD).

17. Method according to one of the claims 9 to 16, **characterized in that** the power of the laser light source (2) is monitored and the laser light source is switched off when a predetermined maximum power is exceeded.

## Revendications

1. Dispositif de sécurité pour phares avec sources de lumière laser, qui est conçu pour éteindre des sources de lumière laser dans des états critiques pour la sécurité, une unité de phares (1) comportant au moins une source de lumière laser (2), un convertisseur de lumière (3) et un système optique (4), un dispositif de surveillance (14) est mis en place pour émettre des signaux de commande (sta, sts, stv) en présence d'états critiques pour la sécurité, et un entraînement de phare (10) est mis en place pour éteindre/maintenir éteinte la ou les sources de lumière laser (2) lorsque de tels signaux de commande (sta, sts, stv) sont fournis,
**caractérisé en ce que**
le dispositif de sécurité comporte un sous-système du côté du véhicule et un sous-système du côté des phares,
les deux sous-systèmes sont reliés par une interface et sont équipés pour échanger des signaux liés à la sécurité (sa1, sa2, sa3, sL, sP, sB, sC, sD), et
au moins un projecteur supplémentaire (8) est prévu ainsi qu'un moyen de commutation (9) commandé par la commande des projecteurs (10), qui allume le projecteur supplémentaire (8) lorsque la source de lumière laser (2) est éteinte,
où
la commande des phares (14) est alimentée par le signal (sv) d'un capteur de vitesse (Sv), la commande des phares étant réglée pour éteindre la source de lumière laser (2) et allumer le projecteur auxiliaire (8) lorsque la vitesse du véhicule (v0) tombe en dessous d'une vitesse prédéterminée.

2. Dispositif de sécurité selon la revendication 1, **caractérisé en ce qu'**un signal de commande (sta) est envoyé par un capteur d'accélération à la commande des phares (1c), qui est conçue pour commander un moyen de coupure (7) de la source de lumière laser (2) lorsqu'une accélération maximale est dépassée.

3. Dispositif de sécurité selon l'une des revendications 1 à 2, **caractérisé en ce qu'**au moins un signal de commande est envoyé par un système de sécurité passive avec une unité de commande d'airbag (12) à la commande de phare (10), qui est conçue pour commander un moyen de coupure (7) de la source de lumière laser (2) lorsque le signal de commande (sta) est envoyé.

4. Dispositif de sécurité selon l'une des revendications 1 à 3, **caractérisé en ce qu'**il est prévu au moins un capteur de projecteur (SL, SP, SB, SD) surveillant les états des composants de l'unité de projecteur (10) et, si des états incorrects sont détectés, un signal de commande (sts) généré dans le dispositif de surveillance (14) est envoyé à la commande de projecteur (10).

5. Dispositif de sécurité selon l'une des revendications 1 à 4, **caractérisé en ce qu'**un capteur de position (SL) est prévu pour le positionnement de la source de lumière laser (2).

6. Dispositif de sécurité selon l'une des revendications 1 à 5, **caractérisé en ce qu'**un capteur de phosphore (SP) est prévu pour l'état du phosphore du convertisseur de lumière (3) de la source de lumière laser (2).

7. Dispositif de sécurité selon l'une des revendications 1 à 6, **caractérisé en ce qu'**au moins un capteur de rupture (SB) est prévu pour au moins un composant de l'unité de phare (1).

8. Dispositif de sécurité selon l'une des revendications 1 à 7, **caractérisé en ce qu'**il est prévu un capteur de couverture et/ou un capteur de verre de couverture (SD) pour l'unité de phare (1).

9. Procédé pour la coupure de sécurité de la au moins une source de lumière laser (2) d'au moins un phare (1) dans un véhicule automobile, dans lequel procédé la source de lumière laser (2) est maintenue éteinte/coupée lorsqu'un signal pertinent pour la sécurité correspondant à un état critique se produit, **caractérisé en ce que**
entre un sous-système du côté du véhicule et un sous-système du côté des phares
les signaux relatifs à la sécurité (sa1, sa2, sa3, sL, sP, sB, sC, sD,) sont échangés via une interface et transmis à un dispositif de surveillance (14) et, à partir de ce dispositif de surveillance, les signaux de commande (sta, sts, stv) sont transmis à une commande de projecteur (10), et
lorsque la source de lumière laser (2) est éteinte, au moins un projecteur supplémentaire (8) est allumé, le signal (sv) d'un capteur de vitesse (Sv) étant transmis à l'entraînement du projecteur (10), la source de lumière laser (2) étant éteinte et le projecteur supplémentaire (8) étant allumé lorsque la vitesse du véhicule tombe en dessous d'une vitesse prédéterminée.

10. Procédé selon la revendication 9, **caractérisé en ce qu'**un signal de commande (sta) d'un capteur d'accélération est envoyé à la commande des phares (10).

11. Procédé selon l'une des revendications 9 à 10, **caractérisé en ce que** des signaux de commande (sta) pour les airbags et/ou les tendeurs de ceinture sont envoyés à la commande des phares (10) par une unité de commande d'airbag (12).

12. Procédé selon l'une des revendications 9 à 11, **caractérisé en ce que** les états des composants de l'unité de projecteur (1) sont surveillés à l'aide d'au moins un capteur de projecteur (SL, SP, SB, SD) et, en cas d'états défectueux, un signal de commande (sts) est envoyé à l'unité de commande de projecteur (10).

13. Méthode selon l'une des revendications 9 à 12, **caractérisée en ce que** le positionnement de la source de lumière laser (2) est surveillé à l'aide d'un capteur (SL).

14. Méthode selon l'une des revendications 9 à 13, **caractérisée en ce que** l'état du convertisseur de lumière (3) de la source de lumière laser (2) est surveillé à l'aide d'un capteur (SP).

15. Méthode selon l'une des revendications 9 à 14, **caractérisée en ce que** l'intégrité de l'unité de phare (1) est surveillée à l'aide d'un capteur de rupture (SbB).

16. Procédé selon l'une des revendications 9 à 15, **caractérisé en ce que** l'état fermé d'au moins un couvercle de l'unité de projecteur (1) est surveillé à l'aide d'un capteur de couvercle (SD).

17. Méthode selon l'une des revendications 9 à 16, **caractérisée en ce que** la puissance de la source de lumière laser (2) est contrôlée et la source de lumière laser est éteinte si une puissance maximale prédéterminée est dépassée.
